# EUROPEAN PATENT APPLICATION

(11) **EP 2 239 891 A1**
(43) Date of publication of application: **13.10.2010**
(21) Application number: 08800942.8
(22) Date of filing: 22.09.2008
(51) Int. Cl.: H04L 12/54

(54) **A METHOD, DEVICE AND SYSTEM FOR ASSOCIATING CONTENT AND CATEGORY**

(30) Priority: 04.02.2008 CN 200810006214
(71) Applicant: Huawei Technologies Co., Ltd., Longgang District, Shenzhen Guangdong 518129 (CN)
(72) Inventor: LIU, Yiling, Shenzhen Guangdong 518129 (CN); GU, Chong, Shenzhen Guangdong 518129 (CN); JOHAN, Zuidweg, Shenzhen Guangdong 518129 (CN)
(74) Representative: Thun, Clemens
(86) International application number: PCT/CN2008/072453
(87) International publication number: WO 2009/097718

(57) **Abstract**

A method for associating content with a category is disclosed. The method includes the steps of: receiving a request for associating content with a category, where the request carries a content reference; obtaining a category according to the content reference, and associating the content reference with the category. A system and device for associating content with a category are also disclosed by the embodiments of the ivention. With the embodiments of the invention, the association request function provides a content reference in an association creating request; the association management function obtains a category according to the content reference, and associates the content reference with the category. In this way, it is possible to associate the content with the category based on only the content information when there is a lack of a category. Therefore, the existing association information may be fully utilized to optimize association relationship and save data flow.

## Description

### FIELD OF THE INVENTION

The present invention relates to the filed of network technology, and more particularly to a method, system and device for associating content with a category.

### BACKGROUND OF THE INVENTION

With the rapid development of the network technology and information technologies, the range of content to which a user has an access gradually goes beyond the limitation of time and space, the probability of the user exposing to content which is unhealthy such as pornography, violence and virus and pose a threat to a client is increased greatly, and thus it has become a strong requirement to screen communication content. The prior screening techniques include list screening technique, keyword screening technique, profile screening technique, and categorization screening technique. The content screening technique based on categorization becomes a hotspot for research due to its characteristics of flexible usage and wide adaptability.

By using a major method, in the prior art, for creating an association of content or a reference with the content, and its category are input simultaneously. It may be possible to create a single association with a single request including one or more pieces of <content, category> information. Alternatively, it may also be possible to create a large number of associations in the form of file, such as a file including a great deal of <content, category> information.

### The prior art has at least the following defects:

Methods for creating an association in the prior art are too limited. A content provider, as a categorization management requester, cannot create an association of content with a category if the content provider only knows the content instead of the category. Meanwhile, in case where it is only intended to add a new content reference to the association of content with its category, it is unreasonable to provide the category at the same time, because traffic waste occurs if an input parameter carries the category. In addition, the prior existing technology only supports that the input parameter is content itself or a content reference. The limited modes of such an input parameter cannot fully take advantage of the relationship between the existing content reference and category, or the feature that each content reference can be used for obtaining the category, especially the feature that a content locator can be used for obtaining the content itself to categorize content o as to replace the content itself to serve as an input parameter, and to achieve the effect that the content itself is not obtained if unnecessary and the content itself can be rapidly obtained if necessary, and thus save data traffic on the whole. Meanwhile, in the prior art, different content references to the same content need to correspond to the category separately, which causes the waste of storage space.

### SUMMARY OF THE INVENTION

Embodiments of the present invention provides a method, system and device for associating content with a category, which implement the association of content with a category based on only the content information when there is a lack of category.

For the above purpose, an embodiment of the present invention provides a method for associating content with a category, including:
receiving a request for creating an association of content with a category, where the request carries a content reference; and
obtaining a category according to the content reference, and associating the content reference with the category.

Another embodiment of the present invention provides a device for managing an association of content with a category. The device includes:
a receiving unit, configured to receive a request for creating an association of content with a category, where the request carries a content reference;
a category obtaining unit, configured to obtain a category based on the content reference received by the receiving unit; and
an association creating unit, configured to associate the content reference with the category that is obtained by the category obtaining unit, based on the category.

Still another embodiment of the present invention provides a device for requesting an association of content with a category. The device includes:
a request generating unit, configured to generate a request for creating an association of content with a category, the request carrying a content reference; and
a request sending unit, configured to send the request generated by the request generating unit to an association management device.

Yet still another embodiment of the present invention provides a system for associating content with a category. The system includes:
an association requesting device, configured to generate a request for creating an association of content with a category and send the request to an association management device, where the request carries a content reference; and
the association management device, configured to receive the request for creating an association of content with a category, obtain a category according to the content reference, and associate the content reference with the category.

Compared with the prior art, the embodiments of the present invention have the following advantages:
The association request function provides the content reference in the request for creating an association; the association management function obtains the category according to the content reference, and associates the content reference with the category. In this way, it is possible to create an association of the content with the category based on only the content information when there is a lack of a category. Therefore, the existing association information is utilized to optimize association relationship and to save data traffic.

### BRIEF DESCRIPTION OF THE DRAWINGS

Fig.1 is a diagram illustrating a system for creating an association of content with a category according to an embodiment of the present invention;
Fig.2 is a diagram illustrating a system for creating an association of content with a category according to another embodiment of the present invention;
Fig.3 is a flowchart illustrating a method for associating content with a category according to an embodiment of the present invention;
Fig.4 is a flowchart illustrating the process of associating content with its category according to an embodiment of the present invention;
Fig.5 is a diagram illustrating the process of performing screening by using association according to a first embodiment of the present invention;
Fig.6 is a flowchart illustrating the association of a content reference with a category according to the first embodiment of the present invention;
Fig.7 is a diagram illustrating the process of associating content with a category according to a second embodiment of the present invention; and
Fig.8 is a diagram illustrating the process of associating content with a category according to a third embodiment of the present invention.

### DETAILED DESCRIPTION OF THE EMBODIMENTS

The embodiments of the present invention are further described with respect to the drawings and examples.

A content reference refers to a content representation form rather than the content itself, and the content reference can serve as a reference or representation of the content, including the forms such as a content locator, a content identifier and a content abstract. The content locator provides information about the place or the way of obtaining the content to be categorized, such as a Universal Resource Identifier (URI) or a Short Message Service (SMS) short code. The content identifier is a character string which explicitly provides the text description on the content and can correspond to the content directly, such as an International Standard Book Number (ISBN) number of a book, an International Standard Audiovisual Number (ISAN) number of an audio-visual content. The content abstract can also explicitly correspond to the content, and is classified into a digital abstract that is calculated based on the content, such as a Message-Digest Algorithm 5 (MD5) abstract and a reduced form content digest which saves the main content features for categorization, such as auto text/video abstract, and thumbnail of pictures.

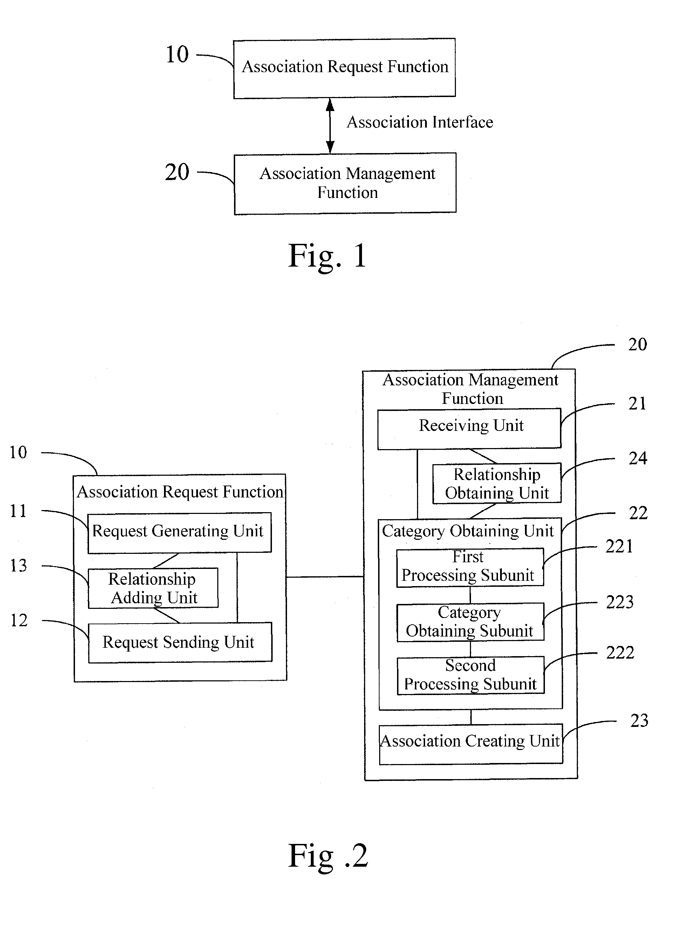

An embodiment of the present invention provides a system for implementing an association of content with a category. As shown in Fig.1, the system includes an association request function 10 and an association management function 20, which are described in detail hereinafter.

The association request function 10 is configured to generate a request for creating association and send the request to the association management function 20. The request carries a content reference. As a provider of association information in the system, the association request function 10 typically provides association information for the association management function 20 through an association interface of content and its category (hereinafter to be simply referred to an association interface), and requests creation of an association. In the embodiment of the present invention, the content information such as a content reference, for which the association request function 10 is configured to request creation of the association, may be a plurality of content references corresponding to the same content. Each content reference may be any combination of a content locator, a content identifier and a content abstract. In the case that the association request function 10 has the content itself, the content locator corresponding to the content itself can be used as one of the content references to be provided.

The association management function 20 is configured to receive a request for creating an association, which is sent by the association request function 10, obtain a category according to the content reference, and associate the content reference with the category. Mainly functioning for the association management of the content and its category in the system, the association management function 20 can create association of the content with its category according to the relevant content information provided by the association request function 10 and return a response. The association information can be utilized to rapidly obtain category information subsequently so as to perform operations such as the control of the access authority of the user to different content.

Specifically, as shown in Fig.2, the association request function 10 further includes: a request generating unit 11, configured to generate the request for creating association, which includes the content reference; and a request sending unit 12, configured to send the request generated by the request generating unit 11 to an association management device.

Additionally and alternatively, the association request function 10 further includes a relationship adding unit 13, which is configured to add relationship indication information that is used to indicate one or more content references to the same content into the request generated by the request generating unit. In addition, when the content itself is included, the content locator corresponding to the content itself is taken as one of the content references included in the request.

Specifically, as shown in Fig. 2, the association management function 20 further includes: a receiving unit 21, configured to receive the request for creating an association, where the request includes the content reference; a category obtaining unit 22, configured to obtain a category based on the content reference received by the receiving unit 21; and an association creating unit 23, configured to associate the content reference with the category that is obtained by the category obtaining unit 22, according to the category.

Additionally and alternatively, the association management function 20 further includes a relationship obtaining unit 24, configured to parse the relationship indication information included in the request received by the receiving unit 21, and determine one or more content references to the same content based on the relationship indication information.

The category obtaining unit 22 further includes:
a first processing subunit 221, configured to, when any one of a plurality of content references to the same content has been associated with a specific category, judge that the content has been associated with the specific category and create association of the specific category with the content references in the plurality of content references which have not been associated with the category, and otherwise to judge that the content is not associated with a category, obtain a category based on any one of the content references, and create association of the plurality of content references with the obtained category;
a second processing subunit 222, configured to judge whether a content reference to a specific content has been associated with a category, and end the association process if the content reference has been associated with a category, and otherwise, to obtain a category based on the content of the content reference, and create association of the content reference with the obtained content; a category obtaining subunit 223, configured to obtain the category information of the content reference by one or more of the following modes and provide the obtained category information for the first processing subunit or the second processing subunit:
providing the content reference for another categorization function entity and receiving the category information of the content reference returned by the categorization function entity; or performing categorization based on the content reference and obtaining the category information of the content reference when the content reference is a reduced form content digest reduced form content digest; or
obtaining the content corresponding to the content reference from an entity holding the content itself, performing categorization according to the content, and obtaining the category information of the content reference when the content reference is a content identifier; or
obtaining the content based on an address locator, performing categorization based on the content, and obtaining the category information of the content reference when the content reference is the address locator.

With the device of the above embodiment of the present invention, a method for creating an association of content with a category based on only the content information is implemented when there is a lack of the category, so that the existing association information can be fully taken advantage of to optimize the association correspondence and reduce data flow.

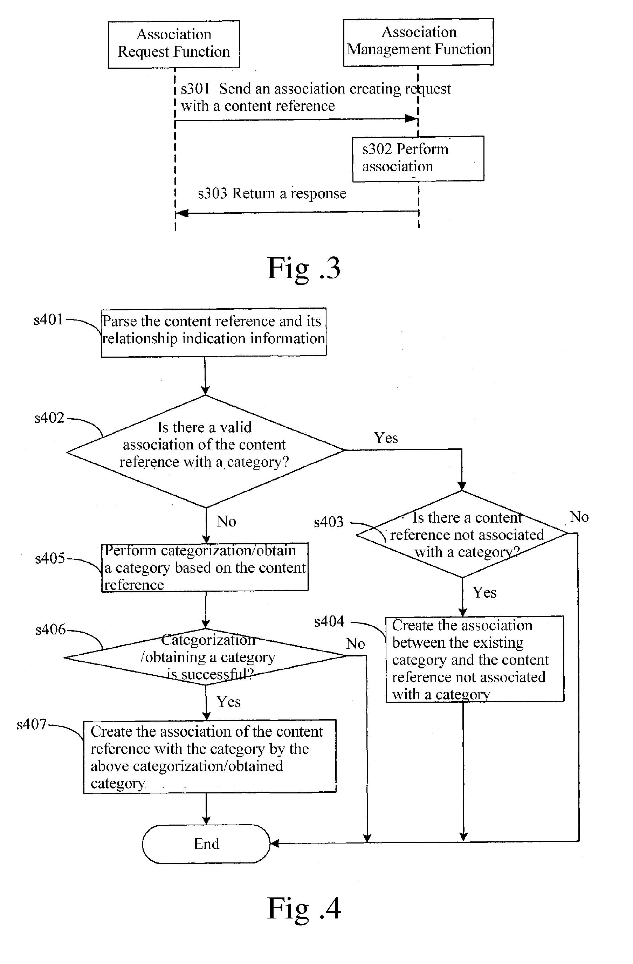

An embodiment of the present invention provides a method for associating content with a category, which is hereinafter described in detail with respect to Fig. 3.

In step s301, an association request function sends a request for creating an association to an association management function. The request includes a content reference.

Specifically, one or more content references can be included in the request, each of which may be a content locator, a content identifier, a content abstract and the like. When the content itself is included, the content locator corresponding to the content itself is included as one of the content references included in the request. If a plurality of content references is included, the plurality of content references may correspond to the same content or to different content. Therefore, a mechanism is needed to indicate whether the plurality of content references correspond to the same content. That is, relationship indication information describing the relationship of the plurality of content references is needed. For an indication based on the extensible Markup Language (XML) as shown below, in which it is shown which content references correspond to the same content in the form of pairs of identifiers <content></content>, it can be seen that there are three pieces of content. The first piece of content includes three content references, the second piece of content includes two content references, and the third piece of content includes one content reference:

```
 <content>

 <content-locator type="URI" value="http://www.associate.com/index.html">
 <content-identifier type="ISAN" value="006A-15FA-002B-C95F-A">
 <content-identifier type="ISWC" value="T-345246800-1">
 </content>
 <content>
 <content-digest type="MD5" value="1e07ab3591d25583eff5129293dc98d2">
 <content-identifier type="http://www.associate.com" value="b4ca02898e3c61:430">
 </content>
 <content>
 <content-locator type="URI" value="http://www.associate.com/logo.gif">
 </content>
```

For example, each of the following content references corresponding to the same content must include a "newContent" attribute, with TRUE indicating a new piece of content and FALSE indicating not a new piece of content:

```
 <content-locator type="URI" value="http://www.associate.com/index.html"
 newContent="TRUE">
 <content-identifier type="ISAN" value="006A-15FA-002B-C95F-A" newContent="FALSE">
 <content-identifier type="ISWC" value="T-345246800-1" newContent= "TRUE">
```

The request for creating an association in the step may be an association creation request message alone, such as CreateAssociationMsg, or an association request message plus an action value, such as RequestAssociationMsg with a parameter ActionType being zero to indicate a Create action.

In step s302, the association management function performs a process of associating the content with its category based on the above content reference.

In step s603, the association management function returns a response to the association request function.

If the association is successfully created, the success is notified in the response; otherwise, the failure is notified in the response possibly with the failure cause.

Now, the process that the association management function performs a process of associating content and its category according to the content reference in the step s302 is described in detail with respect to Fig.4.

In step s401, the association management function parses the content reference and its relationship indication information.

This step is optional. Specifically, when the association management function receives the request, this step is performed if the request includes a content reference and its relationship indication information of the content reference. The association management function parses the content reference and relationship indication information of the content reference, determines which content reference correspond to the same content, and executes the process described in the following steps s402-s407 for each content if it is parsed that there are multiple pieces of content. For simplicity, this process is not illustrated for each piece of content individually, and only a general description is made.

In step s402, the association management function judges whether there is a valid association of a content reference with a category. If there is a plurality of content references to the same content, it is judged that there has been a valid association of the content with the category as long as one of the content references is associated with the category validly. When it is judged that there is a valid association, step s403 is performed; otherwise, the process goes to step s405.

In step s403, when it is judged that there is a valid association, it is further judged whether there is any one of the content references included in the request for creating an association, which is not associated with any category. If the result of the judgment is "NO", the process is ended; otherwise, the process goes to step s404.

In step s404, if there is a content reference not to be associated with any category, the association of the content reference with a category is created and the process is ended. The category herein is obtained from a valid association stored by the association management function.

In step s405, if no valid association is stored, categorization is performed according to the content reference, or a category is obtained from another entity.

Specifically, the method for performing categorization and obtaining a category includes the steps of: (1) obtaining a category directly from another categorization providing entity based on the content reference, where the categorization providing entity is capable of providing the function of determining the categorization according to the content reference; (2) requesting the content itself from an entity holding the relationship of the content reference and the content itself according to the content reference in the form of a non-address locator, and categorizing the content; (3) directly applying an algorithm to the content reference in form of a reduced form content digest to identify and parse the content so as to determine its category; (4) obtaining the content itself corresponding to the content reference as an address locator such as a URI and applying an algorithm to identify and parse the content so as to determine its category.

In step s406, it is judged whether the categorization process or the process of obtaining a category is successful or not. If the result of the judgment is "YES", the process goes to step s407; otherwise, the process is ended.

In step s407, the association of the content reference with the category is created, and the process is ended.

In the first embodiment of the present invention, a specific example of the embodiments of the present invention is described with reference to the circumstance of performing category association with content encrypted by using the Digital Right Management (DRM) way (hereafter referred to as DRM encrypted content). Herein, the association request function is implemented by a server that provides content encrypted by using the DRM way (hereafter referred to as DRM encrypted content providing server), which provides the content after a process of DRM encryption. The association management function is implemented by a Categorization Based Content Screening (CBCS) content categorization server.

There are Content Identifiers (CI's) in a DRM unencrypted format, and the original content itself which is not processed by DRM encryption and the address locator URI indicative of its storage address, but no information of the category managed by the content, on the DRM encrypted content providing server.

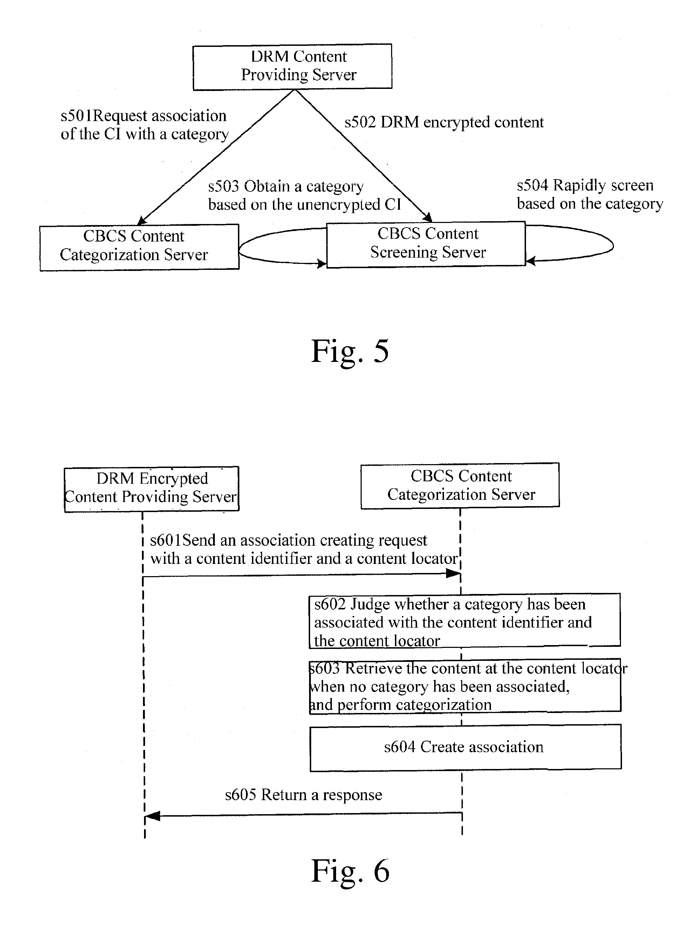

The schematic flowchart illustrating the process of performing screening by using association under this circumstance, as shown in Fig.5, is described as below.

In step s501, the DRM encrypted content providing server requests the CBCS content categorization server to perform an association of a content reference with a category.

As the association request function, the DRM encrypted content providing server provides the content references including CI and URI. The CI, which is the unencrypted data in a DRM packet, can be used as a content reference to create the association with a category. The URI is provided to directly obtain the corresponding content to perform categorization when the CI does not have a corresponding category, so that the association of the CI with the category is created by the CBCS content categorization server.

In step s502, the DRM encrypted content passes through the CBCS content screening server.

In step s503, the CBCS content screening server obtains a category from the CBCS content categorization server based on the unencrypted CI.

In step s504, the CBCS content screening server screens the DRM encrypted content sent from the DRM encrypted content providing server based on the category.

The process that the CBCS content categorization server associates the content reference with the category in step s501 of the above process is further described with reference to Fig.6 as below.

In step s601, the DRM encrypted content providing server sends the request for creating an association to the CBCS content categorization server. The content references included in the request include the CI in the DRM encrypted format and the address storing the original content to which DRM encryption is not performed, that is the content locator URI, with an indication that both the CI and the content locator URI correspond to the same content.

In step s602, the CBCS content categorization server parses the request and determines that the CI and the content locator URI included in the request correspond to the same content, and judges whether the CI and the content locator URI have a corresponding category.

In step s603, if it is judged that the CI and have not a corresponding category, the CBCS content categorization server obtains the original content to which the DRM encryption is not performed based on the URI, and performs categorization on the original content by using an identification and categorization algorithm. If the CI herein is a value assigned uniformly by an International Standards Organization, the CBCS content categorization server can also obtain the original content of the CI from a storage server of the International Standards Organization storing the CI and its original content based on the type of the CI and then perform categorization on the original content. In this operation, it may be necessary to perform an authentication according to the safety and authentication mechanisms of the storage server, and corresponding content can be obtained only when the authentication is successful. In addition, if the CBCS content categorization server knows that there is a database with richer category information, which supports the CI of this type as a content reference, the CBCS content categorization server can also request the database for the category to which the CI belongs by the CI.

In step s604, the CBCS content categorization server creates an association of the above obtained category with the content identifier and the URI. The creation of association herein can add one piece of data into the existing database to store the content identifier, the URI and the category in an association manner.

In step s605, the CBCS content categorization server returns a response to notify the DRM encrypted content providing server of the success of the creation of the association if the operation is successful, and otherwise, notify the DRM encrypted content providing server of the failure of the creation of the association, with the information of the possible failure cause.

In the above example, if the URI of the original content is taken as the CI, it may be possible to request association by only sending the URI. In the case where the DRM encrypted content is screened, the category cannot be obtained depending on the association of the original content with the category. If the DRM encrypted content is provided to the association management function, the association management function needs to take a key and decrypt, and the category can be obtained with the association of the content itself less rapidly than the association of the content reference, and thus it is a good practical application mode to obtain the original content by the URI as the CI.

With the above process, a series of operations such as obtaining a DRM key, decrypting the DRM encrypted content, and categorizing can be avoided, and fast screening can be implemented, while it is not necessary to change the existing DRM encrypted format, thereby resulting in a good compatibility. Moreover, the category is determined by using the URI instead of the content itself and obtaining the content itself based on the URI when it is judged that the URI and especially the CI do not have a corresponding category, thereby reducing the data flow of the first interaction, fully utilizing the existing association relationship, avoiding a large number of data transmission when the content itself does not need to be obtained, and facilitating flexible processing. An effective mode is set by inputting a parameter to support multiple content references while avoiding change to the existing DRM encrypted format, so that the DRM content provider can implement association of the CI with a category without obtaining the category separately, and thus the category of the DRM encrypted content can be rapidly obtained subsequently.

In the second embodiment of the present invention, a specific example of the exemplary embodiments of the present invention will be described with reference to the circumstance including a sub-server and an all-server. Both a content categorization data sub-server SubDB and a content categorization data all-server AllDB store the information of the association of content with its category. The SubDB is deployed together with a content categorization server special for parsing content and determining its category and is used for providing category data and collecting new category data. The AllDB is used for gathering all the association information of the SubDB, and providing the gathered data to update the SubDB. Herein, the SubDB is used as the association request function, and the AllDB is used as the association management function.

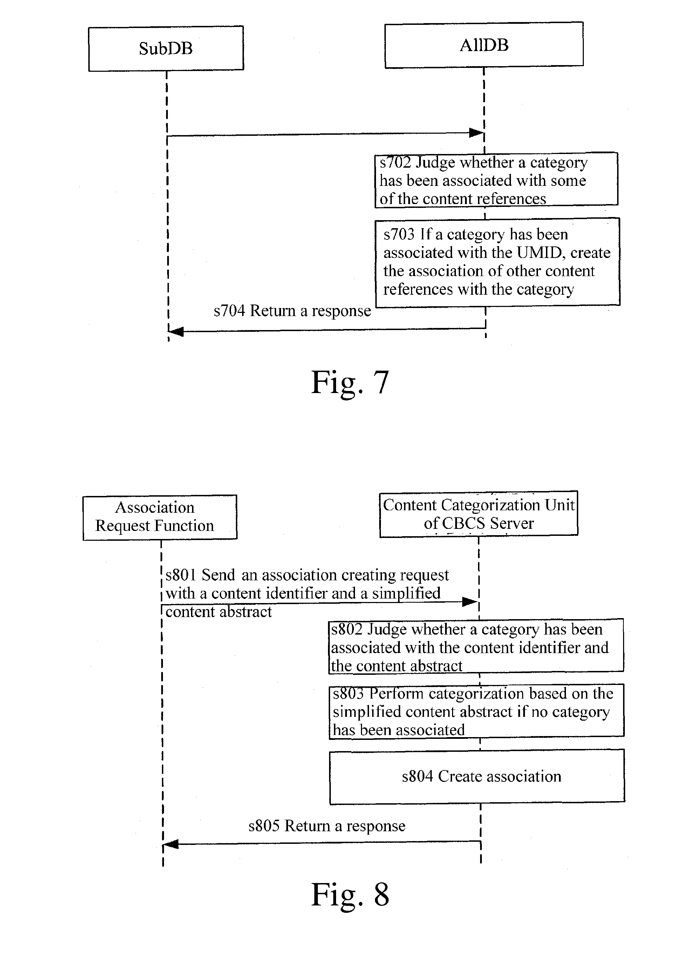

The process of associating content with a category under this circumstance is described hereinafter with reference to Fig.7.

In step s701, the SubDB finds that the International Standard Musical Work Code (ISWC) 1, the Unique Material Identifier (UMID) 1, and the Universal Resource Identifier (URI) 1 correspond to the same content based on the collected association information, and that only the UMID1 is associated with a category in the existing association data. Since the association data is obtained from the AllDB, it means that only the UMID1 is taken as the content reference to the content in the AllDB. Thus, the SubDB sends a request for creating an association to the AllDB, with the ISWC1, UMID1 and URI1 being included as the content references, which are formatted to correspond to the same content, and requests to add content to the AllDB to correspond to the ISWC1 and URI1.

In step s702, the AllDB parses the request, determines that the above content references correspond to the same content, and judges whether any one of the content references has been associated with a corresponding category. As a result, it is found that the UMID1 has been associated with a corresponding category.

In step s703, the AllDB uses the category associated with the UMID1 to create an association of the ISWC1 and URI1, etc. with the category. Specifically, this can be implemented only by adding the ISWC1 and URI1 into the existing item of correspondence between the UMID and the category.

In step s704, the AllDB returns a response to the SubDB to notify that the association requested by the SubDB is created successfully.

In the third embodiment of the present invention, a specific example of the exemplary embodiments of the present invention will be described with reference to the circumstance where a CBCS content categorization unit creates association of a content abstract.

The content categorization unit of the CBCS server is taken as the association management function, and not only can use a categorization algorithm to parse and categorize content but also directly provide a category based on the database of the content categorization unit itself.

The process of associating content with a category under this circumstance is described hereinafter with reference to Fig.8.

In step s801, the association request function sends a request for creating an association to the content categorization unit of the CBCS server. In the request, a content identifier defined by the association request function itself (such as the URI of the association request function and the unique name assigned by the association request function), the reduced form content digest (such as a reduced form content digest of a 1024*768 2.4M BMP picture, or a 133*100 13k GIF picture), and the information indicating that they correspond to the same content are included.

In step s802, the content categorization unit parses the request, determines the content identifier and the content abstract correspond to the same content and then judges whether the content identifier and the content abstract have been associated with a corresponding category.

In step s803, if it is judged that no category has been associated with the content identifier and the content abstract, the content categorization unit performs an algorithm analysis and categorization on the reduced form content digest to obtain the corresponding category.

In step s804, the content categorization unit creates the association of the content identifier and the content abstract with the obtained category based on the category.

In step s805, the content categorization unit returns a response.

With the methods of the above exemplary embodiments of the present invention, a method for creating an association of content with a category only based on a content reference is implemented when there is a lack of a category, thereby fully utilizing the existing association information to optimize association relationship and reduce data flow. Specifically, association of content with its category can be created by using the association request function which knows the content instead of the category by only providing the content reference simply. Meanwhile, the association request function can provide known content reference as much as possible, and ensures that the association management function uses the known content reference and the existing category to achieve the rapid creation of association as much as possible. When the association request function has the content itself, the content locator corresponding to the content itself is used as one of the content references included in the request, so as to help the association management function not obtain the content itself if unnecessary and rapidly obtain the content itself if necessary, and thus achieve the effect of reducing data flow on the whole. When it is verified that no content reference is associated with a category, the association management function can further use different modes for categorization of the content reference to categorize or obtain a category from the outside and to create an association by its categorization or the obtained result, wherein the different modes for categorization of the content reference are, such as, only capable of corresponding to a category simply, or being used for identifying and parsing the content by an algorithm so as to determine the category, or retrieving the content itself, and identifying and parsing the content by the algorithm so as to determine the category. In this way, for the association request function using the content reference to create the association, it is not necessary to consider obtaining the category, and it is possible to take advantage of the all-around service provided by the association management function very conveniently and fully, and fully take advantage of the existing categorization result. In addition, With multiple content references being supported by inputting a parameter, a DRM content provider can implement association of a CI with a category without obtaining the category separately without changing the existing DRM encrypted format, so as to subsequently obtain the category of the DRM encrypted content rapidly.

According to the above description of the embodiments, it is apparent to persons skilled in the art that the present invention can be implemented by means of software plus a necessary universal hardware platform, and certainly by means of hardware alone. However, in most cases, the former is a preferable embodiment. In view of this, the technical solution of the present invention or the part contributing to the prior art in the present invention can substantially be embodied in the form of software products. The computer software product is stored in a storage medium and includes a plurality of instructions for enabling a device to execute the method stated in the embodiments of the present invention.

What is disclosed above is only several exemplary embodiments of the present invention. The present invention is not limited thereby, and any variation of which persons skilled in the art can conceive shall be within the scope of protection of the present invention.

## Claims

1. A method for associating content with a category, comprising:
receiving a request for creating association of content with a category, wherein the request has a content reference carried therein; and
obtaining a category according to the content reference, and associating the content reference with the category.

2. The method according to claim 1, wherein there is one content reference carried in the request.

3. The method according to claim 1, wherein there are a plurality of content references carried in the request;
and wherein the request further carries relationship indication information that is used to indicate the same content or different content corresponding to the plurality of content references.

4. The method according to claim 3, after the step of receiving the request for creating association of content with a category, further comprising:
parsing the request, and determining the content references to the same content based on the relationship indication information.

5. The method according to claim 3, wherein the step of obtaining a category based on the content reference and associating the content reference with the category comprises:
when any one of the plurality of content references to the same content is validly associated with a specific category, judging that the content has been validly associated with the category, and associating the other content references with the specific category, wherein the other content references among the plurality of content references have not been associated with categories.

6. The method according to claim 5, further comprising:
if it is judged that the content is not validly associated with the category, obtaining a category based on any one of the plurality of content references, and creating association of the content references with the obtained category.

7. The method according to claim 2, wherein the step of obtaining a category based on the content reference and associating the content reference with the category comprises:
judging whether a content reference to specific content has been validly associated with a category, and if it is judged that the content reference has not validly associated with a category, obtaining a category based on the content of the content reference and creating association of the content reference with the obtained content.

8. The method according to any one of claims 1-7, wherein the content reference comprises one or more of a reduced form content digest, a content identifier and an address locator.

9. The method according to any one of claim 1, 6 or 7, wherein the step of obtaining a category based on the content of the content reference is performed in one or more of the following ways of:
providing the content reference to another categorization function entity, and receiving category information for the content reference returned by the other categorization function entity; or
performing categorization based on the content reference and obtaining category information for the content reference when the content reference is a reduced form content digest; or
obtaining content corresponding to the content reference from an entity holding the content itself when the content reference is a content identifier, performing categorization based on the content, and obtaining the category information for the content reference; or
when the content reference is an address locator, obtaining content based on the address locator, performing categorization based on the content, and obtaining category information for the content reference.

10. The method according to claim 1, after the step of the obtaining a category based on the content reference and associating the content reference with the category, further comprising:
sending a response to the request for creating an association, wherein the response comprises a response of success or failure of creating the association.

11. A device for managing an association of content with a category, comprising:
a receiving unit, configured to receive a request for creating an association of content with a category, the request having a content reference carried therein;
a category obtaining unit, configured to obtain a category based on the content reference received by the receiving unit; and
an association creating unit, configured to associate the content reference and the category obtained by the category obtaining unit based on the category.

12. The device according to claim 11, further comprising:
a relationship obtaining unit, configured to parse relationship indication information carried in the request received by the receiving unit, and determining one or more content references to the same content based on the relationship indication information.

13. The device according to claim 11, wherein the category obtaining unit is further configured to comprise:
a first processing subunit, configured to: when any one of a plurality of content references to the same content has been validly associated with a specific category, judge that the content has been validly associated with the category, and create an association of the specific category with the other content references among the plurality of content references, which have not been validly associated with the specific category.

14. The device according to claim 11, wherein the category obtaining unit is further configured to comprise:
a second processing subunit, configured to judge whether a content reference to a specific content has been validly associated with a category, obtain a category based on the content of the content reference if the content reference has not been validly associated with a category, and create an association of the content reference with the obtained category.

15. The device according to any one of claim 13 or 14, wherein the category obtaining unit is further configured to comprise:
a category obtaining subunit, configured to obtain category information of the content reference, and provide the obtained category information to one of the first processing subunit or the second processing subunit.

16. A device for requesting an association of content with a category, comprising:
a request generating unit, configured to generate a request for creating an association of content with a category, the request having a content reference carried therein; and
a request sending unit, configured to send the request generated by the request generating unit to an association management apparatus.

17. The device according to claim 16, further comprising:
a relationship adding unit, configured to add relationship indication information into the request generated by the request generating unit, wherein the information is used to indicate one or more content references to the same content.

18. The device according to claim 17, wherein the relationship adding unit comprises a first relationship adding unit that is configured to use a content locator corresponding to the content itself as one of the content references carried in the request when the request carries the content itself

19. A system for associating content with a category, comprising:
an association requesting device, configured to generate a request for creating an association of content with a category and send the request to an association management device, the request having a content reference carried therein; and
the association management device, configured to receive the request for crating an association of content with a category, obtaining a category based on the content reference, and associating the content reference and the category.
